(19) Europäisches Patentamt
European Patent Office
Office européen des brevets

(11) EP 4 336 583 A1

(12) EUROPEAN PATENT APPLICATION
published in accordance with Art. 153(4) EPC

(43) Date of publication:
**13.03.2024 Bulletin 2024/11**

(21) Application number: **22798840.9**

(22) Date of filing: **22.03.2022**

(51) International Patent Classification (IPC):
***H01M 4/131*** *(2010.01)* ***H01M 4/505*** *(2010.01)*
***H01M 4/525*** *(2010.01)* ***H01M 4/62*** *(2006.01)*
***H01M 10/052*** *(2010.01)*

(52) Cooperative Patent Classification (CPC):
**H01M 4/131; H01M 4/1391; H01M 4/505; H01M 4/525; H01M 4/62; H01M 10/052;** Y02E 60/10

(86) International application number:
**PCT/JP2022/013041**

(87) International publication number:
**WO 2022/234733 (10.11.2022 Gazette 2022/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.05.2021 JP 2021078300**

(71) Applicant: **Niterra Co., Ltd.**
**Nagoya-shi, Aichi 461-0005 (JP)**

(72) Inventors:
- **MATSUURA, Hiroyuki**
  **Nagoya-shi, Aichi 467-8525 (JP)**
- **NOHARA, Naoya**
  **Nagoya-shi, Aichi 467-8525 (JP)**
- **YAMAMOTO, Hiroshi**
  **Nagoya-shi, Aichi 467-8525 (JP)**

(74) Representative: **Grünecker Patent- und Rechtsanwälte**
**PartG mbB**
**Leopoldstraße 4**
**80802 München (DE)**

# (54) POSITIVE ELECTRODE MIXTURE LAYER AND LITHIUM-ION SECONDARY BATTERY

(57) The present invention provides a positive electrode mixture layer and a lithium-ion secondary battery that can improve the charge/discharge cycle life. The positive electrode mixture layer contains an active material, a solid electrolyte, and a binder. The active material contains a compound that contains Li, Ni, Mn, Co, and O, and the solid electrolyte contains an oxide that has a garnet-type structure and contains Li, La, and Zr. The positive electrode mixture layer contains an ionic liquid that contains an imidazolium cation and a sulfonyl imide anion. The proportion of the number of Ni atoms with respect to the total number of Li, Ni, Mn, Co, and O atoms that exist in one molecule of the compound is 12.5% or less. The amount of oxide with respect to the positive electrode mixture layer is 1-25 vol%.

*FIGURE*

10
12
11
13
18
19
20
14
21
17
15
20
16

EP 4 336 583 A1

## Description

### TECHNICAL FIELD

The present invention relates to a positive electrode mixture layer and to a lithium ion secondary battery.

### BACKGROUND ART

There has been known a positive electrode mixture layer containing a composite and a binder, in which the composite is prepared by mixing an active material which is formed of a compound including Li, Ni, Mn, Co, and O with a solid electrolyte which is formed of an oxide having a garnet-type structure containing Li, La, and Zr (Patent Literature 1).

### CITATION LIST

### PATENT LITERATURE

Patent Literature 1: JP2019-175830A

### SUMMARY OF INVENTION

### TECHNICAL PROBLEM

In the related art, a considerably high resistance is imposed on migration of lithium ions through the solid-solid interface between the compound (active material) and the oxide. As a result, the amount of lithium ions migrating through the interface in a charge/discharge process gradually decreases. That is, the charge/discharge cycle life becomes insufficient.

The present invention has been conceived so as to solve the problem, and an object of the invention is to provide a positive electrode mixture layer that can enhance the charge/discharge cycle life, and another object is to provide a lithium ion secondary battery having the positive electrode mixture layer.

### SOLUTION TO PROBLEM

In order to attain the aforementioned objects, the present invention provides a positive electrode mixture layer which includes an active material, a solid electrolyte, and a binder, in which the active material contains a compound including Li, Ni, Mn, Co, and O; and the solid electrolyte contains an oxide having a garnet structure which contains Li, La, and Zr. The positive electrode mixture layer further contains an ionic liquid which contains an imidazolium cation and a sulfonylimide anion. The ratio of the number of Ni atoms present in one molecule of the compound to the total number of Li, Ni, Mn, Co, and O atoms present in the molecule is 12.5% or less. The relative amount of oxide with respect to the positive electrode mixture layer is 1 to 25 vol.%. The lithium ion secondary battery of the present invention has the positive electrode mixture layer.

### ADVANTAGEOUS EFFECTS OF INVENTION

Since the positive electrode mixture layer of the present invention contains an ionic liquid, a liquid-solid interface is provided between the compound and the oxide. The ratio of the number of Ni atoms present in one molecule of the compound to the total number of Li, Ni, Mn, Co, and O atoms present in the molecule is 12.5% or less, and the relative amount of oxide with respect to the positive electrode mixture layer is 1 to 25 vol.%. Thus, the basicity of the compound and the oxide is weakened, and decomposition of imidazolium cations present in the ionic liquid can be reduced. The resistance imposed on the migration of lithium ions through the liquid-solid interface between the compound and the oxide is maintained at a low level, whereby the change/discharge cycle life of the positive electrode mixture layer or the lithium ion secondary battery can be enhanced.

### BRIEF DESCRIPTION OF DRAWINGS

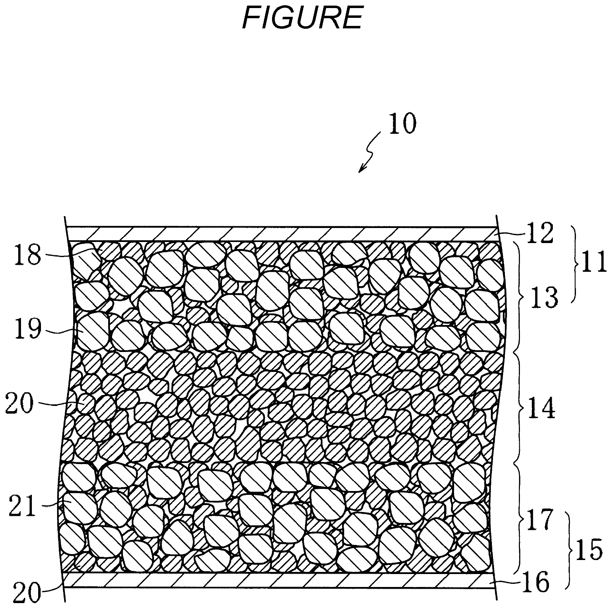

The FIGURE is a cross-sectional view of a lithium ion secondary battery of an embodiment.

DESCRIPTION OF EMBODIMENTS

Hereinafter, a preferred embodiment of the present invention will be described with reference to the attached drawing. The FIGURE is a schematic cross-sectional view of a lithium ion secondary battery (hereinafter referred to as a "secondary battery") 10 in one embodiment. The secondary battery 10 of the present embodiment corresponds to a solid battery in which power generating elements are formed of a solid material. The expression "a power generating element is formed of a solid material" refers to a case in which a main body of the power generating element is formed of a solid material, and does not exclude an embodiment in which the main body has been impregnated with liquid.

As shown in the FIGURE, the secondary battery 10 includes, from top to bottom, a positive electrode layer 11, an electrolyte layer 14, and a negative electrode layer 15. The positive electrode layer 11, the electrolyte layer 14, and the negative electrode layer 15 are built in a case (not illustrated).

The positive electrode layer 11 includes a positive electrode mixture layer 13 and a current-collecting layer 12 stacked thereon. The current-collecting layer 12 is a member having an electrical conductivity. Examples of the material of the current-collecting layer 12 include metals selected from among Ni, Ti, Fe, and Al; alloys each containing two or more of such metals; stainless steel; and carbon material.

The positive electrode mixture layer 13 contains a solid electrolyte, an active material, an ionic liquid, and a binder. For lowering the electrical resistance of the positive electrode mixture layer 13, the positive electrode mixture layer 13 may contain a conducting aid. Examples of the conducting aid include carbon black, acetylene black, Ketjen black, carbon fiber, Ni, Pt, and Ag.

The solid electrolyte contains an oxide 18 having lithium ion conductivity attributed to a garnet-type structure which contains Li, La, Zr, and O. The standard composition of the garnet-type structure oxide is $Li_5La_3M_2O_{12}$ (M=Nb, Ta). Examples the oxide 18 include $Li_7La_3Zr_2O_{12}$, corresponding to the standard composition in which the hexavalent cation M is substituted by a tetravalent cation. The oxide 18 has a crystal structure, for example, a cubic system (space group: Ia-3d ("-" is an over-line representing rotary inversion), JCPDS:84-1753). The oxide 18 exhibits basicity.

In addition to Li, La, and Zr, the oxide 18 may further contain at least one element selected from the group consisting of Mg, Al, Si, Ca, Ti, V, Ga, Sr, Y, Nb, Sn, Sb, Ba, Hf, Ta, W, Bi, Rb, and lanthanoid (except for La). Examples of the oxide include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Z_{1.75}Nb_{0.25}O_{12}$, $Li_{6.9}La_3Zr_{1.675}Ta_{0.289}Bi_{0.036}O_{12}$, $Li_{6.46}Ga_{0.23}La_3zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly, the oxide 18 preferably contains at least one of Mg and element A (A represents at least one element selected from the group consisting of Ca, Sr, and Ba), and satisfies all the following conditions (1) to (3) regarding mole proportions of the elements. Alternatively, the oxide 18 preferably contains both Mg and element A, and satisfies all the following conditions (4) to (6) regarding mole proportions of the elements. From the viewpoint of elevating the ion conductivity of the oxide 18, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

The particles of the oxide 18 observed in the cross-section of the positive electrode mixture layer 13 preferably have a circle equivalent median diameter of 0.5 to 10 μm or less, since the surface area of the oxide 18 is adjusted to an appropriate value, and the amount of migration of lithium ions between the oxide 18 and the ionic liquid having lithium ion conductivity present on the surface of the oxide 18 is ensured.

The median diameter of the oxide 18 is determined in the following manner. Firstly, a cut surface of the positive electrode mixture layer 13 (i.e., a surface obtained through polishing or irradiating with a focused ion beam (FIB)) is provided . An image of the oxide 18 observed under a scanning electron microscope (SEM) is analyzed. Based on the area of any particle of the oxide 18, the circle equivalent diameter of the particle is calculated. Thus, a volume-based particle size distribution is obtained. The median diameter corresponds to a circle equivalent diameter at which the cumulative value of frequency in a volume-based particle size distribution reaches 50%. For securing accuracy, the image for providing the particle size distribution must have an area of 400 $\mu m^2$ or wider in the cross-section of the positive electrode mixture layer 13.

The active material (reactive substance) included in the positive electrode mixture layer 13 contains a compound 19 containing Li, Ni, Mn, Co, and O. In the compound 19, the ratio of the number of Ni atoms present in one molecule of the compound 19 to the total number of Li, Ni, Mn, Co, and O atoms present in the molecule is 12.5% or less. The ratio is adjusted as above for weaken the basicity of the compound 19.

An example of the compound 19 is a compound represented by a chemical formula: $LiNi_aMn_bCo_cM_XO_2$. In the chemical formula, M represents one or more elements selected from among Mg, Ti, Nb, Fe, Cr, Si, Al, Ga, V, Zn, Cu, Sr, Mo, Zr, Sn, Ta, W, La, Ce, Pb, Bi, and Ge. The parameters a, b, c, and x are numbers satisfying the following conditions: $0.3 \leq a < 1$, $0 < b \leq 0.7$, $0 < c \leq 0.7$, $0 \leq x \leq 0.3$, and $3a+3b+3c+(\text{valence of M}) \times x=3$ $(a/(3+a+b+c) \leq 0.125)$.

Examples of the compound 19 include $LiNi_{1/3}Mn_{1/3}Co_{1/3}O_2$, $LiNi_{0.2}Mn_{0.4}Co_{0.4}O_2$, $LiNi_{0.5}Mn_{0.3}Co_{0.2}O_2$, $LiNi_{0.33}Mn_{0.33}Co_{0.31}Mg_{0.03}O_2$, and $LiNi_{0.33}Mn_{0.33}Co_{0.31}Zn_{0.03}O_2$.

In order to suppress reaction between the compound 19 and the oxide 18, a coating layer may be provided on the compound 19. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

In addition to the compound 19, the active material may further include, for example, inverse-spinel type oxides such as $LiNiVO_4$, $LiCoPO_4$, and $LiCoVO_4$; spinel-type oxides such as $LiMn_{1.5}Ni_{0.5}O_4$, $LiMn_2O_4$, and $LiCo_{0.3}Ni_{0.7}O_2$; olivine-type oxides such as $Fe_2(SO_4)_3$ and $LiFePO_4$; and layer-type oxides such as $LiCoO_2$ and $Li_{1+x}(Fe,Mn,Co)_{1-X}O_2$. The amount(s) of active material(s) other than the compound 19 is 0 vol.% or more and less than 50 vol.%, with respect to the entire volume of the active material including the compound 19.

The ionic liquid contained in the positive electrode mixture layer 13 contains an electrolyte salt dissolved therein. The ionic liquid is a compound formed of a cation and an anion, and assumes liquid at ambient temperature and atmospheric pressure. Since the ionic liquid containing an electrolyte salt dissolved therein forms the electrolytic solution, inflammability of the electrolytic solution can be enhanced. Various properties and functions of the electrolytic solution are determined by the type and salt concentration of the electrolyte salt and the ionic liquid.

The electrolyte salt is a compound for use in donation and acceptance of cations between the positive electrode layer 11 and the negative electrode layer 15. The electrolyte salt is, for example, a lithium salt. Examples of the anion of the electrolyte salt include halide ions (e.g., $I^-$, $Cl^-$,and $Br^-$), $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (R represents a C1 to C4 alkyl group, a phenyl group, or a naphthyl group).

The anion of the electrolyte salt is preferably a sulfonylimido moiety having a sulfonyl group $-S(=O)_2-$; such as $N(SO_2F)_2^-$, $N(SO_2CF_3)_2^-$, or $N(SO_2C_2F_5)_2^-$ for an advantageous property of the sulfonylimide anion. Specifically, even when the salt concentration increases, a rise in viscosity of the electrolytic solution and a drop in ion conductivity are suppressed. In some cases, $N(SO_2F)_2^-$ may be referred to as bis(fluorosulfonyl)imide anion (abbreviated as [FSI]-), and $N(SO_2CF_3)_2^-$ may be referred to as bis(trifluoromethanesulfonyl)imide anion (abbreviated as [TFSI]-).

The ionic liquid preferably includes an imidazolium as a cationic moiety. An example of the imidazolium cation is a compound represented by formula (1).

[F1]

R3
R4
N+
(1)
R2
R5
N
R1

In formula (1), each of $R^1$ to $R^5$ represents a hydrogen group or an alkyl group. The alkyl group may have a substituent. The alkyl group (including a substituent) represented by any of $R^1$ to $R^5$ preferably has 1 to 10 carbon atoms, more preferably 1 to 5 carbon atoms, still more preferably 1 to 4 carbon atoms, from the viewpoint of ensuring ion conductivity in the electrolytic solution.

No particular limitation is imposed on the substituent. Examples of the substituent include an alkyl group, a cycloalkyl group, an aryl group, a hydroxyl group, a carboxyl group, a nitro group, a trifluoromethyl group, an amido group, a carbamoyl group, an ester group, a carbonyloxy group, a cyano group, a halogeno group, an alkoxy group, an aryloxy group, and a sulfonamido group.

The anion moiety of the ionic liquid is preferably a sulfonylimido moiety. Examples of the sulfonylimide anion include $N(SO_2F)_2^-$, $N(SO_2CF_3)_2^-$, $N(SO_2C_2F_5)_2^-$, and $N(SO_2C_4F_9)_2^-$. Examples of the ionic liquid include 1-ethyl-3-methylimidazolium bis(fluorosulfonyl)imide (EMI-FSI) and 1-ethyl-3-methylimidazolium bis(trifluoromethanesulfonyl)imide (EMI-TFSI). An ionic liquid (electrolytic solution) which includes an imidazolium cation and a sulfonylimide anion and in which an electrolyte salt is dissolved is preferred, from the viewpoint of ensuring high ion conductivity.

The lithium ion concentration of the electrolytic solution is preferably 1 mol/$dm^3$, or higher, more preferably 3 mol/$dm^3$ or higher, from the viewpoint of securing ion conductivity while the potential window on the oxidation side of the electrolytic solution contained in the positive electrode mixture layer 13 is widened. A conceivable mechanism of this is attributable to interaction between the oxide 18 and the electrolytic solution. In the electrolytic solution having a lithium ion concentration of 3 mol/$dm^3$ or higher, a tetracoordination state (i.e., a stable solvation state of $Li^+$) cannot be achieved, even when all solvent molecules coordinate to $Li^+$. In this case, coordination of counter anions occurs, to thereby result in so-called ion association. In an electrolytic solution in which ion association predominates in the absence of uncoordinated solvent, the highest occupied molecular orbital (HOMO) of the electrolytic solution lowers, and the oxidation potential rises. Since all solvent molecules coordinate to $Li^+$, a rise in oxidation potential of the electrolytic solution results in widening of the potential window on the oxidation side of the positive electrode mixture layer 13.

The oxide 18 content of the positive electrode mixture layer 13 is preferably 1 to 25 vol.%, more preferably 3 to 15 vol.%, from the viewpoints of securing lithium ion conductivity attributed to the oxide 18 and suppression of the basicity of the positive electrode mixture layer 13 also attributed to the oxide 18, to thereby reduce decomposition of the ionic liquid.

The compound 19 content of the positive electrode mixture layer 13 is preferably 40 to 85 vol.%, more preferably 40 to 70 vol.%, from the viewpoint of securing discharge capacity of the secondary battery 10 and low internal resistance of the positive electrode mixture layer 13.

The ionic liquid content of the positive electrode mixture layer 13 is preferably 3 to 35 vol.%, more preferably 10 to 30 vol.%, from the viewpoints of securing low internal resistance of the positive electrode mixture layer 13 and preventing leakage of the ionic liquid from the positive electrode mixture layer 13.

The amount of each of the oxide 18, the compound 19, and the ionic liquid (vol.%) with respect to the positive electrode mixture layer 13 is determined in the following manner. Specifically, the positive electrode mixture layer 13 is frozen or embedded in a 4-function epoxy resin or the like. Then, a vision field (×5,000) is selected at random from a cross-section (i.e., a surface obtained through polishing or irradiating with a focused ion beam (FIB)) of the positive electrode mixture layer 13. The vision field is analyzed under an SEM equipped with an energy-dispersive X-ray spectrometer (EDS). In the analysis, the distributional feature of La, Zr, Ni, and S is specified, and the contrast of a reflective electron image is analyzed, to thereby determine the areas of the oxide 18, the compound 19, and the ionic liquid. The ratio of the cross-sectional area of the oxide 18, the compound 19, or the ionic liquid to the cross-sectional area of the

positive electrode mixture layer 13 is considered to be a volume ratio of each component to the positive electrode mixture layer 13. Thus, the component content (vol.%) is determined.

No particular limitation is imposed on the binder incorporated into the positive electrode mixture layer 13, so long as the binder is a polymer which can fix the oxide 18 and the compound 19. Examples of the binder include fluorinated resin, polyolefin, rubber-like polymer such as styrene-butadiene rubber, polyimide, polyvinylpyrroridone, polyvinyl alcohol, and cellulose ether.

Examples of the fluorinated resin include completely fluorinated resin, partially fluorinated resin, and fluorinated resin copolymer. Examples of the completely fluorinated resin include polytetrafluoroethylene. Examples of the partially fluorinated resin include polychlorotrifluoroethylene, poly(vinylidene fluoride), and poly(vinyl fluoride). Examples of the fluorinated resin copolymer include 4-fluoroethylene-perfluoroalkyl vinyl ether copolymer, 4-fluoroethylene-6-fluoropropylene copolymer, ethylene-4-fluoroethylene copolymer, and ethylene-chlorotrifluoroethylene copolymer.

No particular limitation is imposed on the vinylidene fluoride polymer, so long as the polymer has $-CH_2CF_2-$. Examples of the vinylidene fluoride polymer include a vinylidene fluoride homopolymer and a copolymer of vinylidene fluoride and a copolymerizable monomer.

Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. The copolymer is formed through polymerization of one or more copolymerizable monomers with vinylidene fluoride.

The binder content (vol.%) of the positive electrode mixture layer 13 is preferably 10 vol.% or less (except for 0 vol.%). The preferred range is set for securing formability and handling property of the positive electrode mixture layer 13 by the binder and reducing a drop in ion conductivity of the positive electrode mixture layer 13 by the incorporated binder. Similar to the above case, the binder content (vol.%) of the positive electrode mixture layer 13 is obtained from a percentage area of the binder to the cross-section of the positive electrode mixture layer 13 which is determined through SEM-EDS analysis.

The positive electrode mixture layer 13 contains the oxide 18 (solid electrolyte), the compound 19 (active material), an electrolyte salt, an ionic liquid, and a binder. The ionic liquid includes an imidazolium cation and a sulfonylimide anion. Since the ionic liquid (electrolytic solution) containing an electrolyte salt dissolved therein is present between the oxide 18 and the compound 19, a liquid-solid interface is provided between the oxide 18 and the compound 19.

When a proton is released from the imidazolium cation by the basicity of the positive electrode mixture layer 13, the ionic liquid decomposed, whereby ion conductivity of the electrolytic solution decreases. However, since the ratio of the number of Ni atoms present in one molecule of the compound 19 to the total number of Li, Ni, Mn, Co, and O atoms present in the molecule is 12.5% or less, and the relative amount of the oxide 18 with respect to the positive electrode mixture layer 13 is 1 to 25 vol.%, the basicity of the positive electrode mixture layer 13 can be weakened. Also, decomposition of the imidazolium cation included in the electrolytic solution can be reduced, the resistance in migration of lithium ions through the liquid-solid interface between the oxide 18 and the compound 19 can be maintained at low level. As a result, the change/discharge cycle life of the positive electrode mixture layer 13 can be enhanced.

The electrolyte layer 14 contains a solid electrolyte 20. Examples of the solid electrolyte 20 include an oxide electrolyte, a sulfide electrolyte, and a hydride electrolyte. Examples of the oxide electrolyte include a perovskite-type oxide, a NASICON-type oxide, a LISICON-type oxide, and a garnet-type oxide. Examples of the sulfide electrolyte include a thio-LISICON-type sulfide, an $Li_{10}GeP_2S_{12}$ sulfide, an argyrodite-type sulfide, an $Li_7P_3S_{11}$ sulfide, and glass or a glass or glass ceramic sulfide such as $Li_2S$-$P_2S_5$. Examples of the hydride electrolyte include alkali metal or alkaline earth metal hydrides each containing at least one element belonging to group 13 element (e.g., B, Al, Ga, In, and Ta) of the 18-group periodic table. Specific examples thereof include $LiBH_4$ and $LiAlH_4$. The solid electrolyte 20 includes one more species members among these compounds.

The negative electrode layer 15 includes the negative electrode mixture layer 17 and a current-collecting layer 16 stacked thereon. The current-collecting layer 16 is a member having an electrical conductivity. Examples of the material of the current-collecting layer 16 include metals selected from among Ni, Ti, Fe, Cu, and Si; alloys each containing two or more of such metals; stainless steel; and carbon material.

The negative electrode mixture layer 17 contains the solid electrolyte 20 and the active material 21. In order to lower the resistance of the negative electrode mixture layer 17, the negative electrode mixture layer 17 may further contain a conducting aid. Examples of the conducting aid include carbon black, acetylene black, Ketjen black, carbon fiber, Ni, Pt, and Ag. Examples of the active material 21 include Li, Li-Al alloy, $Li_4Ti_5O_{12}$, graphite, In, Si, Si-Li alloy, and SiO. Similar to the positive electrode mixture layer 13, the electrolyte layer 14 or the negative electrode mixture layer 17 may further contain an electrolytic solution or a binder.

The secondary battery 10 is fabricated through, for example, the following procedure. Specifically, an electrolyte

salt is dissolved in an ionic liquid, and the solution is mixed with the solid electrolyte 20. To the resultant mixture, a solution of a binder is added with mixing, to thereby form a slurry. The slurry is molded into a tape, which is then dried, to thereby yield a green sheet (electrolyte sheet) for providing the electrolyte layer 14.

Separately, an electrolyte salt is dissolved in an ionic liquid, and the solution is mixed with the oxide 18. To the resultant mixture, the compound 19 and a solution of a binder are sequentially added with mixing, to thereby form a slurry. The slurry is formed into a tape on the current-collecting layer 12 and then dried to form a green sheet (i.e., a positive electrode sheet) for providing the positive electrode layer 11.

Similarly, an electrolyte salt is dissolved in an ionic liquid, and the solution is mixed with the solid electrolyte 20. To the resultant mixture, the active material 21 and a solution of a binder are sequentially added with mixing, to thereby form a slurry. The slurry is formed into a tape on the current-collecting layer 16 and then dried to form a green sheet (i.e., a negative electrode sheet) for providing the negative electrode layer 15.

The electrolyte sheet, the positive electrode sheet, and the negative electrode sheet are cut into a shape of interest. The cut products thereof are stacked from the positive electrode sheet, the electrolyte sheet, and the negative electrode sheet in that sequence, and the stacked product is pressed to integrate the sheets. To each of the current-collecting layers 12 and 16, a terminal (not illustrated) is connected, and the product is built in a case (not illustrated), and the case is closed. Thus, a secondary battery 10 in which the positive electrode layer 11, the electrolyte layer 14, and the negative electrode layer 15 stacked in that sequence can be fabricated.

## EXAMPLES

The present invention will next be described in detail by way of examples, which should not be construed as limiting the invention thereto.

### (Preparation of electrolytic solution)

To 1-Ethyl-3-methylimidazolium bis(fluorosulfonyl)imide (EMI-FSI), serving as an ionic liquid, an electrolyte salt $LiN(SO_2F)_2$ was added with mixing to a concentration of 3 mol/dm$^3$, to thereby provide an electrolytic solution.

### (Preparation of binder solution)

Poly(vinylidene fluoride), serving as a binder, was dissolved in dimethyl carbonate, to thereby provide a binder solution.

### (Example 1)

An active material (compound) [$LiNi_{1/3}Mn_{1/3}Co_{1/3}O_2$ (hereinafter abbreviated as "NMC111")], a solid electrolyte (oxide) [$Li_7La_3Zr_2O_{12}$], an electrolytic solution, and a conducting aid (carbon fiber) were weighed and mixed together by means of a mortar. Then, a binder solution was added to the thus-obtained mixture with mixing, to thereby prepare a slurry. The slurry was applied onto an aluminum foil and dried at 90°C for 1 hour under reduced pressure, to thereby form a positive electrode layer (thickness: 30 $\mu$m) in which a positive electrode mixture layer was stacked on a current-collecting layer. The ratio of the number of Ni atoms present in one NMC111 molecule to the total number of Li, Ni, Mn, Co, and O atoms present in the molecule was 8.3 %. In the positive electrode mixture layer, the relative amounts of the compound, the oxide, the electrolytic solution, the conducting aid, and the binder were 67 vol.%, 3 vol.%, 20 vol.%, 1 vol.%, and 9 vol.%, respectively.

Separately, an active material (natural graphite), a solid electrolyte [$Li_7La_3Zr_2O_{12}$], an electrolytic solution, and a conducting aid (carbon fiber) were weighed and mixed together by means of a mortar. Then, a binder solution was added to the thus-obtained mixture with mixing, to thereby prepare a slurry. The slurry was applied onto a copper foil and dried at 90°C for 1 hour under reduced pressure, to thereby form a negative electrode layer (thickness: 40 $\mu$m) in which a negative electrode mixture layer was stacked on a current-collecting layer. In the negative electrode mixture layer, the relative amounts of the active material, the solid electrolyte, the electrolytic solution, the conducting aid, and the binder were 65 vol.%, 6 vol.%, 20 vol.%, 1 vol.%, and 8 vol.%, respectively.

Yet separately, a solid electrolyte [$Li_7La_3Zr_2O_{12}$] and an electrolytic solution were weighed and mixed together by means of a mortar. Then, a binder solution was added to the thus-obtained mixture with mixing, to thereby prepare a slurry. The slurry was applied onto a synthetic resin film and dried at 90°C for 1 hour under reduced pressure, to thereby form an electrolyte layer (thickness: 50 $\mu$m). In the electrolyte layer, the relative amounts of the solid electrolyte, the electrolytic solution, and the binder were 62 vol.%, 29 vol.%, and 9 vol.%, respectively.

The positive electrode layer, the negative electrode layer, and the electrolyte layer were cut into a shape of interest. The electrolyte layer was detached from the film and inserted and adhered between the positive electrode

mixture layer and the negative electrode mixture layer. The stacked product was placed in an aluminum-laminated film container, to thereby fabricate a cell of Example 1. All the above operations were conducted in an Ar atmosphere.

(Example 2)

The procedure of Example 1 was repeated, except that the relative amounts of the compound, the oxide, the electrolytic solution, the conducting aid, and the binder in the positive electrode mixture layer were adjusted to 65 vol.%, 5 vol.%, 20 vol.%, 1 vol.%, and 9 vol.%, respectively, to thereby fabricate a cell of Example 2.

(Example 3)

The procedure of Example 1 was repeated, except that the relative amounts of the compound, the oxide, the electrolytic solution, the conducting aid, and the binder in the positive electrode mixture layer were adjusted to 60 vol.%, 10 vol.%, 20 vol.%, 1 vol.%, and 9 vol.%, respectively, to thereby fabricate a cell of Example 3.

(Example 4)

The procedure of Example 1 was repeated, except that the relative amounts of the compound, the oxide, the electrolytic solution, the conducting aid, and the binder in the positive electrode mixture layer were adjusted to 55 vol.%, 15 vol.%, 20 vol.%, 1 vol.%, and 9 vol.%, respectively, to thereby fabricate a cell of Example 4.

(Example 5)

The procedure of Example 1 was repeated, except that the active material (compound) of the positive electrode mixture layer was changed to $LiNi_{0.5}Mn_{0.3}Co_{0.2}O_2$ (hereinafter abbreviated as "NMC532"), to thereby fabricate a cell of Example 5. Notably, the ratio of the number of Ni atoms present in one NMC532 molecule to the total number of Li, Ni, Mn, Co, and O atoms present in the molecule was 12.5%.

(Example 6)

The procedure of Example 1 was repeated, except that the relative amounts of the compound, the oxide, the electrolytic solution, the conducting aid, and the binder in the positive electrode mixture layer were adjusted to 69 vol.%, 1 vol.%, 20 vol.%, 1 vol.%, and 9 vol.%, respectively, to thereby fabricate a cell of Example 6.

(Example 7)

The procedure of Example 1 was repeated, except that the relative amounts of the compound, the oxide, the electrolytic solution, the conducting aid, and the binder in the positive electrode mixture layer were adjusted to 50 vol.%, 20 vol.%, 20 vol.%, 1 vol.%, and 9 vol.%, respectively, to thereby fabricate a cell of Example 7.

(Example 8)

The procedure of Example 1 was repeated, except that the relative amounts of the compound, the oxide, the electrolytic solution, the conducting aid, and the binder in the positive electrode mixture layer were adjusted to 45 vol.%, 25 vol.%, 20 vol.%, 1 vol.%, and 9 vol.%, respectively, to thereby fabricate a cell of Example 8.

(Example 9)

The procedure of Example 1 was repeated, except that the compound of the positive electrode mixture layer was changed to NMC532, and the relative amounts of the compound, the oxide, the electrolytic solution, the conducting aid, and the binder in the positive electrode mixture layer were adjusted to 45 vol.%, 25 vol.%, 20 vol.%, 1 vol.%, and 9 vol.%, respectively, to thereby fabricate a cell of Example 9.

(Comparative Example 1)

The procedure of Example 1 was repeated, except that the relative amounts of the compound, the oxide, the electrolytic solution, the conducting aid, and the binder in the positive electrode mixture layer were adjusted to 70 vol.%, 0 vol.%, 20 vol.%, 1 vol.%, and 9 vol.%, respectively, to thereby fabricate a cell of Comparative Example 1.

(Comparative Example 2)

The procedure of Example 1 was repeated, except that the relative amounts of the compound, the oxide, the electrolytic solution, the conducting aid, and the binder in the positive electrode mixture layer were adjusted to 40 vol.%, 30 vol.%, 20 vol.%, 1 vol.%, and 9 vol.%, respectively, to thereby fabricate a cell of Comparative Example 2.

(Comparative Example 3)

The procedure of Example 1 was repeated, except that the compound of the positive electrode mixture layer was changed to NMC532, and the relative amounts of the compound, the oxide, the electrolytic solution, the conducting aid, and the binder in the positive electrode mixture layer were adjusted to 40 vol.%, 30 vol.%, 20 vol.%, 1 vol.%, and 9 vol.%, respectively, to thereby fabricate a cell of Comparative Example 3.

(Comparative Example 4)

The procedure of Example 1 was repeated, except that the active material (compound) of the positive electrode mixture layer was changed to $LiNi_{0.6}Mn_{0.2}Co_{0.2}O_2$ (hereinafter abbreviated as "NMC622"), and the relative amounts of the compound, the oxide, the electrolytic solution, the conducting aid, and the binder in the positive electrode mixture layer were adjusted to 69 vol.%, 1 vol.%, 20 vol.%, 1 vol.%, and 9 vol.%, respectively, to thereby fabricate a cell of Comparative Example 4. Notably, the ratio of the number of Ni atoms present in one NMC622 molecule to the total number of Li, Ni, Mn, Co, and O atoms present in the molecule was 15.0%.

(Comparative Example 5)

The procedure of Example 1 was repeated, except that the active material (compound) of the positive electrode mixture layer was changed to $LiNi_{0.8}Mn_{0.1}Co_{0.1}O_2$ (hereinafter abbreviated as "NMC811 "), and the relative amounts of the compound, the oxide, the electrolytic solution, the conducting aid, and the binder in the positive electrode mixture layer were adjusted to 69 vol.%, 1 vol.%, 20 vol.%, 1 vol.%, and 9 vol.%, respectively, to thereby fabricate a cell of Comparative Example 5. Notably, the ratio of the number of Ni atoms present in one NMC811 molecule to the total number of Li, Ni, Mn, Co, and O atoms present in the molecule was 20.0%.

(Comparative Example 6)

The procedure of Example 1 was repeated, except that the active material (compound) of the positive electrode mixture layer was changed to $LiNi_{0.8}Co_{0.15}Al_{0.05}O_2$ (hereinafter abbreviated as "NCA"), and the relative amounts of the compound, the oxide, the electrolytic solution, the conducting aid, and the binder in the positive electrode mixture layer were adjusted to 69 vol.%, 1 vol.%, 20 vol.%, 1 vol.%, and 9 vol.%, respectively, to thereby fabricate a cell of Comparative Example 6. Notably, the ratio of the number of Ni atoms present in one NCA molecule to the total number of Li, Ni, Co, Al, and O atoms present in the molecule was 20.0%.

(Charge/discharge test)

A charge/discharge test was performed at room temperature with respect to each of the cells produced in the Examples and the Comparative Examples. In the test, the cell was charged by a constant current (at a rate of 0.1 C) until the terminal voltage reached the charge upper limit voltage (3.6 V), and then the cell was discharged at a constant current (at a rate of 0.1 C) (i.e., unit charge/discharge cycle). The charge/discharge cycle was repeatedly performed 10 times. The ratio in discharge capacity (i.e., discharge capacity after 10 cycles to discharge capacity after 1 cycle), corresponding to the capacity maintenance, was determined. A capacity maintenance of 99% or higher was rated as "A"; a capacity maintenance of 95% or higher and lower than 99% was evaluated as "B"; and a capacity maintenance lower than 95% was evaluated as "C."

[Table 1]

| | Compounds | | | | | | Oxide (vol. %) | Capacity maintenance |
|---|---|---|---|---|---|---|---|---|
| | NMC111 (vol.%) | NMC532 (vol.%) | NMC622 (vol.%) | NMC811 (vol.%) | NCA (vol. %) | Ni (%) | | |
| Ex. 1 | 67 | | | | | 8.3 | 3 | A |
| Ex. 2 | 65 | | | | | 8.3 | 5 | A |
| Ex. 3 | 60 | | | | | 8.3 | 10 | A |
| Ex. 4 | 55 | | | | | 8.3 | 15 | A |
| Ex. 5 | | 67 | | | | 12.5 | 3 | A |
| Ex. 6 | 69 | | | | | 8.3 | 1 | B |
| Ex. 7 | 50 | | | | | 8.3 | 20 | B |
| Ex. 8 | 45 | | | | | 8.3 | 25 | B |
| Ex. 9 | | 45 | | | | 12.5 | 25 | B |
| Comp. 1 | 70 | | | | | 8.3 | 0 | C |
| Comp. 2 | 40 | | | | | 8.3 | 30 | C |
| Comp. 3 | | 40 | | | | 12.5 | 30 | C |
| Comp. 4 | | | 69 | | | 15.0 | 1 | C |
| Comp. 5 | | | | 69 | | 20.0 | 1 | C |
| Comp. 6 | | | | | 69 | 20.0 | 1 | C |

Table 1 shows abbreviations and relative amounts (vol.%) of the compounds contained in the positive electrode mixture layer; the ratio (%) of the number of Ni atoms present in one molecule of each compound to the total number of Li, Ni, Mn, Co, and O atoms present in the molecule; the relative amount (vol.%) of the oxide in the positive electrode mixture layer; and scores of capacity maintenance. The cells of Examples 1 to 5 were evaluated as A. The cells of Examples 6 to 9 were evaluated as B. The cells of Comparative Examples 1 to 6 were evaluated as C.

In comparison of Example 6 (score: B) with Comparative Examples 4 to 6 (score: C), the relative oxide content was 1 vol.% in all the cases. As difference, the Ni atom ratio of one molecule of the compound was 12.5% in Example 6, and 15% or more in Comparative Examples 4 to 6. Conceivably, in Comparative Examples 4 to 6, the basicity of the compound increased, and cations in the electrolytic solution were decomposed. Thus, the resistance to migration of lithium ions through the interface between the compound and the oxide during a charge/discharge process gradually increased, whereby the capacity maintenance decreased. In contrast, conceivably, in Example 6, the basicity of the compound decreased, and decomposition of cations in the electrolytic solution was suppressed, whereby higher capacity maintenance was achieved as compared with Comparative Examples 4 to 6.

In comparison of Examples 8 and 9 (score: B) and Comparative Examples 2 and 3 (score: C), the Ni atom ratio of one molecule of the compound was 12.5% or less in all cases. As difference, the relative oxide content was 25 vol.% in Examples 8 and 9 and 30 vol.% in Comparative Examples 2 and 3. Conceivably, in Comparative Examples 2 and 3, the basicity increased by a higher oxide content, and cations in the electrolytic solution contained in the positive electrode mixture layer were decomposed. Thus, the resistance to migration of lithium ions through the interface between the compound and the oxide during a charge/discharge process gradually increased, whereby the capacity maintenance decreased. In contrast, conceivably, in Examples 8 and 9, the basicity of the compound decreased, and decomposition of cations in the electrolytic solution was suppressed, whereby higher capacity maintenance was achieved as compared with Comparative Examples 2 and 3.

In comparison of Example 1 (score: A) with Comparative Example 1 (score: C), the Ni atom ratio of one

compound was 8.3% in all cases. As difference, the oxide content in Example 1 was 3 vol.%, but no oxide was present in Comparative Example 1. Conceivably, in Example 1, decomposition of the electrolytic solution was suppressed by an oxide content of 3 vol.%., whereby higher capacity maintenance was achieved as compared with Comparative Example 1.

In comparison of Examples 1 to 5 (score: A) and Examples 6 to 9 (score: B), the Ni atom ratio of one compound was 8.3 to 12.5% in all cases. As difference, the oxide content was 3 to 15 vol.% in Examples 1 to 5, but the oxide content was less than 3 vol.% or in excess of 15 vol.% in Examples 6 to 9. Conceivably, in Examples 1 to 5, decomposition of the electrolytic solution was suppressed by an oxide having a content of 3 to 15 vol.%., whereby higher capacity maintenance was achieved as compared with Examples 6 to 9.

These Examples have revealed that change/discharge cycle life can be enhanced by a positive electrode mixture layer including a compound including Li, Ni, Mn, Co, and O; an oxide having a garnet structure which contains Li ,La, and Zr; an ionic liquid which contains an imidazolium cation and a sulfonylimide anion; and binder, in which the ratio of the number of Ni atoms present in one molecule of the compound to the total number of Li, Ni, Mn, Co, and O atoms present in the molecule is 12.5% or less, and the relative amount of oxide is 1 to 25 vol.%.

The present invention has been described in detail by way of the embodiment. However, the present invention is not limited to the above embodiment. Those skilled in the art can easily conceive various improvements and modifications, so long as they fall within the scope of the present invention.

In the above-described embodiment, the secondary battery 10 has the positive electrode layer 11 in which the positive electrode mixture layer 13 is provided on one surface of the current-collecting layer 12, and the negative electrode layer 15 in which the negative electrode mixture layer 17 is provided on one surface of the current-collecting layer 16. However, the present invention is not limited thereto. It should be apparent for those skilled in the art that the elements of the above embodiments can be applied to a secondary battery in which an electrode layer having the current-collecting layer 12 on which the positive electrode mixture layer 13 and the negative electrode mixture layer 17 are disposed respectively (i.e., a so-called bipolar electrode). By alternatingly stacking the bipolar electrode and the electrolyte layer 14, and inserting the stacked product into a case (not illustrated), a so-called bipolar structure secondary battery can be obtained.

REFERENCE SIGNS LIST

10 lithium ion secondary battery
13 positive electrode mixture layer
18 oxide
19 compound

## Claims

1. A positive electrode mixture layer comprising an active material, a solid electrolyte, and a binder, wherein:

   the active material contains a compound including Li, Ni, Mn, Co, and O;
   the solid electrolyte contains an oxide having a garnet structure which contains Li, La, and Zr;
   the positive electrode mixture layer further contains an ionic liquid which contains an imidazolium cation and a sulfonylimide anion;
   the ratio of the number of Ni atoms present in one molecule of the compound to the total number of Li, Ni, Mn, Co, and O atoms present in the molecule is 12.5% or less; and
   the relative amount of oxide with respect to the positive electrode mixture layer is 1 to 25 vol.%.

2. The positive electrode mixture layer according to claim 1, wherein the relative amount of oxide with respect to the positive electrode mixture layer is 3 to 15 vol.%.

3. A lithium ion secondary battery comprising the positive electrode mixture layer according to claim 1 or 2.

FIGURE

10
12
11
18
13
19
20
14
21
17
15
20
16

## INTERNATIONAL SEARCH REPORT

International application No.
**PCT/JP2022/013041**

**A. CLASSIFICATION OF SUBJECT MATTER**

***H01M 4/131***(2010.01)i; ***H01M 4/505***(2010.01)i; ***H01M 4/525***(2010.01)i; ***H01M 4/62***(2006.01)i; ***H01M 10/052***(2010.01)i
FI: H01M4/131; H01M4/525; H01M4/505; H01M4/62 Z; H01M10/052

According to International Patent Classification (IPC) or to both national classification and IPC

**B. FIELDS SEARCHED**

Minimum documentation searched (classification system followed by classification symbols)

H01M4/131; H01M4/505; H01M4/525; H01M4/62; H01M10/052

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2021/033424 A1 (NGK SPARK PLUG CO., LTD.) 25 February 2021 (2021-02-25) sample no. S11 | 1-3 |
| A | JP 2020-113444 A (TOYOTA MOTOR CORP.) 27 July 2020 (2020-07-27) claims, paragraph [0055] | 1-3 |
| A | JP 2020-38771 A (TOYOTA MOTOR CORP.) 12 March 2020 (2020-03-12) claims | 1-3 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/013041**

| Patent document cited in search report | Publication date (day/month/year) | Patent family member(s) | Publication date (day/month/year) |
|---|---|---|---|
| WO 2021/033424 A1 | 25 February 2021 | (Family: none) | |
| JP 2020-113444 A | 27 July 2020 | (Family: none) | |
| JP 2020-38771 A | 12 March 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019175830 A